Europäisches Patentamt

European Patent Office

Office européen des brevets

(19)

(11) Veröffentlichungsnummer: **0 003 043**
**B1**

(12) **EUROPÄISCHE PATENTSCHRIFT**

(45) Veröffentlichungstag der Patentschrift: 01.04.81

(21) Anmeldenummer: 78101840.3

(22) Anmeldetag: 23.12.78

(51) Int. Cl.³: **G 03 C  1/04, C 08 F  2/32,
C 08 F  8/12, C 08 F  220/06**

(54) **Photographisches Material.**

(30) Priorität: 05.01.78 DE 2800466

(43) Veröffentlichungstag der Anmeldung:
**25.07.79 Patentblatt 79/15**

(45) Bekanntmachung des Hinweises auf die Patenterteilung:
**01.04.81 Patentblatt 81/13**

(84) Benannte Vertragsstaaten:
**BE CH DE FR GB**

(56) Entgegenhaltungen:
**FR - A - 1 076 453
FR - A - 2 037 855
FR - A - 2 167 501
GB - A - 434 474
US - A - 3 291 611
US - A - 4 059 552**

(73) Patentinhaber: **AGFA-GEVAERT Aktiengesellschaft
Patentabteilung
D-5090 Leverkusen 1 (DE)**

(72) Erfinder: **Brück, Rolf, Dr.
Kolpingstrasse 11
D-5090 Leverkusen 3 (DE)**
Erfinder: **Wolff, Erich, Dr.
Carl-Rumpff-Strasse 29
D-5090 Leverkusen (DE)**

Courier Press, Leamington Spa, England.

# 0 003 043

## Photographisches Material

Die Erfindung betrifft ein photographisches lichtempfindliches Material, das in wenigstens einer seiner Schichten aus einer wäßrigen Dispersion eingebrachte vernetzte Polymersalze zur Verbesserung der mechanischen und elektrostatischen Eigenschaften der Schichten enthält.

Die Verwendung von Polymeren, insbesondere von Acrylpolymeren, in photographischen, Gelatine enthaltenden Materialien ist seit langem bekannt. So läßt sich z.B. die für photographische Zwecke weniger wertvolle sauer geäscherte Gelatine in einer Pfropfpolymerisationsreaktion mit Acrylmonomeren zu einem Produkt umsetzen, dessen Eigenschaften denen einer alkalisch geäscherten Gelatine nahekommen (US—PS 3 291 611). Man kann auch die Acrylpolymeren selbst photographischen Gelatineemulsionen zusetzen und erreicht damit die für bestimmte Zwecke erwünschte Erhöhung der Viskosität solcher Emulsionen (FR—PS 20 37 855).

Es ist weiter bekannt, lösliche Polymersalze in photographischen Materialien z.B. als Antistatikum, Bindemittel oder Mattierungsmittel zu verwenden. Beispiele für solche Polymere, die sich für diese Zwecke eignen, sind salzartige Verbindungen der Polyacrylsäure, Polystyrolsulfonsäure, von Mischpolymeren, die quaternäre Ammoniumgruppen enthalten, der von Copolymeren von Methacrylsäure und Methacrylsäuremethylester. Ihre Anwendung ist jedoch mit einer Reihe von Nachteilen verbunden.

Polymersalze von niedrigem bis mittlerem Polymerisationsgrad und niederem Molekulargewicht neigen dazu, aus der Schicht, in die sie zunächst eingebracht wurden, in eine benachbarte hydrophile Schicht auszudiffundieren. Dies kann bereits beim Beguß bzw. bei nachträglichen Überschichtungen geschehen. Auch bei Lagerung der photographischen Materialien, insbesondere bei höherer relativer Luftfeuchte, ist diese Diffusion festzustellen.

Polymersalze, die als Antistatikum auf die Rückseite eines photographischen Filmes aufgebracht werden, bekannte Verbindungen dieser Art sind z.B. Copolymere aus Acrylsäure, Methacrylsäure und Styrolsulfonsäure verlieren häufig ihre Wirkung, wenn Filmrollen längere Zeit lagern und die Rückseite des Materials mit den hydrophilen Emulsionsschichten in Kontakt steht. Auch hier tritt die obengenannte Diffusion ein, wobei die Leitfähigkeit der Rückseitenschicht um eine Zehnerpotenz abnehmen kann.

Die durch Diffusion der Polymersalze entstehenden Nachteile können zwar durch Verwendung höhermolekularer Polymersalze hintenangehalten werden, doch hat diese Maßnahme ein Ansteigen der Viskosität der Begießmischungen zur Folge, was einen weiteren Nachteil darstellt, da bei der Herstellung photographischer Schichten im allgemeinen nur Viskositäten von maximal 20 bis 30 cP verarbeitet werden. Aber auch dann, wenn höhere Viskositäten in Kauf genommen werden können, muß damit gerechnet werden, daß bis zu 60% der höhermolekularen Polymersalze in die benachbarten photographischen Schichten eindiffundieren.

Es ist ein weiterer Nachteil der bekannten Polymersalze, daß sie bei der Verarbeitung der photographischen Materialien in Entwicklungsbädern eine unerwünscht starke Quellung der Schichten verursachen. Die hat eine teilweise oder vollständige Ablösung der photographischen Schichten von ihrer Unterlage zur Folge. Diese nachteiligen Eigenschaften zeigen alle Polymersalze, die pro Monomereinheit im Durchschnitt mehr als 0,5 Mol Salzgruppen enthalten.

Aus der US—AS 2 992 101 sind Mischpolymerisate aus Methacrylsäure und Methylmethacrylat bekannt, die im neutralen pH-Gebiet eine Dispersion bilden. Die Mischpolymerisate werden in Schutzschichten farbphotographischer Mehrschichtenmaterialien zur Verhinderung von Newton-Ringen verwendet. Die Dispersion sind zwar niedrigviskos und diffusionsfest, die Mischpolymerisate haben aber den Nachteil, bei höherem pH in den Entwicklungsbädern Alkalisalze zu bilden und gelöst zu werden.

Es ist schließlich bekannt, mattierte photographische Schichten dadurch herzustellen, daß man Gelatinepulver in einem flüchtigen organischen Lösungsmittel, z.B. Äthylalkohol, das Formaldehyd enthält, vermahlt, das Lösungsmittel durch ein anderes unpolares organisches Lösungsmittel, z.B. Benzol, ersetzt, das unpolare Lösungsmittel verdampft und das erhaltene gehärtete Gelatinepulver, gegebenenfalls nach Redispergieren in Wasser, zur Mattierung photographischer Schichten verwendet (US—A 2 043 906). Nachteilig an diesem Verfahren ist jedoch, daß auch durch intensivstes Vermahlen nur relativ grobe Teilchen erhalten werden können, deren Teilchengrößen stark variieren. Photographische Schichten, die solche Mattierungsmittel enthalten, weisen eine für die meisten Zwecke zu grobe Mattierung auf.

Der Erfindung liegt die Aufgabe zugrunde, wäßrige Polymersalzdispersionen zu entwickeln, die als Zusatz für Gießzusammensetzungen photographischer Schichten verwendet werden können, um die mechanischen und elektrostatischen Eigenschaften der Schichten zu verbessern, ohne daß gleichzeitig die vorher genannten Nachteile der bekannten Polymersalze in Erscheinung treten.

Gegenstand der Erfindung ist ein photographisches lichtempfindliches Material mit mindestens einer Silberhalogenidemulsionsschicht, das in mindestens einer seiner lichtempfindlichen oder nicht lichtempfindlichen Schichten ein durch Emulsionspolymerisation hergestelltes teilchenförmiges Acrylpolymerisat enthält, und das dadurch gekennzeichnet ist, daß als Acrylpolymerisat ein vernetztes Acrylsäure- und/oder Methacrylsäurepolymerisat vorliegt, das eine Teilchengröße im Trockenzustand von 0,01 bis 5 $\mu$, vorzugsweise 0,03 bis 2 $\mu$ und einen Quellgewichtsfaktor in Wasser von 4—40 aufweist, wobei das Polymerisat entweder

a) durch inverse Emulsionspolymerisation (Wasser in Öl) von Acrylsäure- und/oder Methacrylsäure-Monomeren in Gegenwart polyfunktioneller vernetzend wirkender Monomerer und eines Emulgators, Brechen der Emulsion und Redispergierung der Polymerteilchen in Wasser, oder

b) durch Emulsionspolymerisation kurzkettiger, bis zu 3 C-Atome enthaltender aliphatischer Ester von Acrylsäure- und/oder Methacrylsäure in Wasser in Gegenwart polyfunktioneller vernetzend wirkender Monomerer und eines Emulgators, und anschließender Verseifung des Polymeren hergestellt wurde.

Die Vorteile der erfindungsgemäß verwendeten Dispersionen organischer Polymersalze bestehen darin, daß die dispergierten Teilchen, die aus durch kovalente Bindungen vernetzten Partikeln bestehen, diffusionsfest sind, die Dispersionen dünnflüssig und die Quellung der Teilchen und damit der photographischen Schichten begrenzt ist, daß weiter eine zusätzliche Härtung überflüssig ist und die Teilchen bei Änderung des pH-Wertes, z.B. in photographischen Verarbeitungsbädern, unlöslich bleiben.

Die Herstellung der erfindungsgemäß verwendeten wäßrigen Dispersionen hydrophiler quellbarer Polymerteilchen kann in an sich bekannter Weise durch inverse Polymerisation in einer Wasser-in-Öl-Phase unter Verwendung von polyfunktionellen Monomeren, die als Vernetzer wirken, erfolgen. Die in wäßriger Phase gelösten zu polymerisierenden Monomeren bestehen zu 70 bis 95 Gew.-% aus einer Carboxylgruppen enthaltenden Vinylverbindung, gegebenenfalls in Salzform, wie z.B. Acrylsäure, Methacrylsäure, Sulfoäthylmethacrylat, Acrylamido-2-methylpropan-sulfonsäure, Styrolsulfonsäure, (Meth-) Allylsulfonsäure und gegebenenfalls geringe Anteile (0 bis 25 Gew.-%) von wasserlöslischen Monomeren, wie Acrylamid oder N-Vinyl-pyrrolidon. Weiter enthält die wäßrige Phase 5 bis 30 Gew.-% als Vernetzer wirkende wasserlösliche Verbindungen z.B. Bisacrylamide wie Methylenbisacrylamid, Glyoxalbisacrylamid, N,N'-Dihydroxyäthylenbisacrylamid, N,N'-Cystaminbisacrylamid wie z.B. von J. N. Hausen in Anal. Biochem. 76, S. 37—44 (1976) beschrieben werden, Triacrylyldiäthylentriamin wie beschrieben in der US—PS 3 607 393, (Meth-)Acrylsäureester von Polyäthern wie Polyäthylenglykol-400-diacrylat oder Polyäthylenglykol-400-dimethacrylat, kationische bifunktionelle (Meth-)acrylsäureester wie z.B. beschrieben in Polymer Letters Bd. 7, S 395—402 (1969) oder Divinylsulfon.

Zur Induzierung der Polymerisationsreaktion werden der wäßrigen Phase außerdem Beschleuniger zugesetzt, wie z.B. Persulfate, Peroxyde, Azodinitrile oder Peroxiester. Für bestimmte Zwecke, etwa wenn Produkte mit besonders hohem Molekulargewischt hergestellt werden sollen, erweist es sich als günstig, wenn der Primärschritt der Bildung von Start-Radikalen in der organischen Phase oder der Phasengrenzfläche erfolgt und die die Polyerisation auslösenden Radikale erst durch Diffusion in das wäßrige Tröpfchen gelangen. Man verfährt in diesen Fällen so, daß man bevorzugt organische, lösliche Polymerisationsinitiatoren verwendet.

Als organische Phase werden mit Wasser nicht mischbare unpolare organische Lösungsmittel verwendet, wie z.B. höhersiedende Benzine wie Waschbenzin oder Ligroin, höhersiedende Paraffine wie z.B. $C_6$—$C_{16}$-Kohlenwasserstoffe, weiter Toluol, Xylole, Perchloräthylen oder Tetrachlorkohlenstoff.

Zur Emulgierung der wäßrigen Phase in der Ölphase können alle bekannten Wasser/Öl-Emulgatoren, vorzugsweise solche mit niederen HLB-Werten (vgl. Firmenschrift der Atlas Chemical Industries, 1963, "Das Atlas HLB-System"), vorzugsweise von 3 bis 8, eingesetzt werden. "HLB" steht für "Hydrophylic-Lipophylic-Balance". Der HLB-Wert eines Emulgators sagt über sein hydrophileslipophiles Gleichgewicht aus, d.h. das Gleichgewicht der Größe und Stärke der hydrophilen (wasserfreundlichen oder polaren) und der lipophilen (ölfreundlichen oder nicht polaren) Gruppen des Emulgators. Als Beispiele für geeignete Emulgatoren selen genannt Glycerin-mono-di-oleat, Sorbitandi-oleat, Sorbitan-mono-oleatstearat, -laurat, -palmitat, Polyäthylen-glycerin-monooleat, Polyoxyäthylen-sorbitan-fettsäureester, d.h. Umsetzungsprodukte von 1 Mol der angegebenen Sorbitanfettsäureester mit 4 bis 40 Mol Äthylenoxid, Polyäthylen-sorbitester von Fett- und Harzsäuren und deren Mischungen. Ein Überblick über die für das Verfahren der Erfindung verwendbaren Emulgatoren und deren HLB-Werte gibt F. Hölscher in der Abhandlung "Dispersionen synthetischer Hochpolymerer" aus der Reihe "Chemie, Physik und Technologie der Kunststoffe in Einzeldarstellungen" (Springer-Verlag 1969), Seiten 58 und 59 sowie Schlick "Non-ionic Surfactants" Band 1, Seiten 609 bis 611.

Als Dispergiergeräte für die Herstellung der Wasser-in-Öl Emulsionen eigner sich alle bekannten Mischgeräte mit hohem Schergefälle.

Nach Beendigung der Polymerisationsreaktion wird die Emulsion gebrochen, z.B. durch Zugabe eines mit Wasser mischbaren organischen Lösungsmittels wie Methanol oder Aceton, das ausfallende Reaktionsgut abfiltert, gewaschen und in Wasser redispergiert. In den nachfolgenden Beispielen 1 bis 3 wird dieses Verfahren näher erläutert.

Auch durch Polymerisation einer Öl-in-Wasser-Emulsion sind die Polymerteilchen der Erfindung leicht herstellbar. Man wird in diesem Falle leicht verseifbare polymerisierbare Ester in Gegenwart eines unverseifbaren polyfunktionellen Vernetzers polymerisieren und danach den entstandenen Polyester durch Alkalizusatz in eine Polymersalzdispersion überführen. Beispiele für geeignete polymerisierbare Ester sind Acrylsäuremethylester, Acrylsäureäthylester, Acrylsäurepropylester, Methacrylsäuremethylester oder Methacrylsäureäthylester.

Als polyfunktionelle Vernetzer eignen sich in Wasser weitgehend unlösliche Verbindungen wie

**0 003 043**

z.B. Divinylbenzol, Trivinylcyclohexan, Trivinylbenzol, 2,3,5,6-Tetrachlor-1,4-divinylbenzol, Ester ungesättigter Säuren mit ungesättigten Alkoholen, z.B. Vinylcrotonat, Allylmethacrylat, Allylcrotonat, Ester ungesättigter Säuren mit polyfunktionellen Alkoholen, z.B. Trimethylolpropantrimethacrylat, Neopentylglykoldimethacrylat, Butandioldimethacrylat, 1,6-Hexandiol-diacrylat, 1,5-Pentandiol-diacrylat, Pentaerythrit-triacrylat, Tetraäthylenglykol-diacrylat, Triäthylenglykol-diacrylat, Ester ungesättigter Alkohole mit polyfunktionellen Säuren, z.B. Diäthylphthalat, ungesättigte Polyäther, z.B. Triäthylenglykol-divinyläther. Weitere geeignete Vernetzer werden z.B. in Houben-Weyl, Methoden der organischen Chemie, Band XIV/1, Seiten 32—33 beschrieben.

Der Erläuterung dieser Verfahrensweise der Polymerisation einer Öl-in-Wasser-Emulsion dient das Beispiel 8. Die im folgenden beschriebenen Verfahrensmerkmale sind für die Eigenschaften der nach den beiden Polymerisationsverfahren hergestellten Polymerteilchen von besonderer Bedeutung.

Das Quellverhalten der dispergierten Teilchen wird bei beiden Polymerisationsverfahren entscheidend beeinflußt durch die Menge des Vernetzers die während der Reaktion zur Verfügung steht. Eine höhere Vernetzermenge bewirkt eine geringere Quellung.

Das an zweiter Stelle genannte Verfahren liefert im Vergleich zu dem erstgenannten Verfahren kleinere Polymerteilchen, und zwar mit einer Maximalgröße von 0,3 $\mu$. Auch diese Teilchen sind praktisch diffusionsfest, so daß ihre Wirkung auf die Schicht fixiert bleibt, in der sie enthalten sind. Bei einem Anteil von etwa 25 Gewichtsprozent und mehr, bezogen auf den Bindemittelgehalt einer Schicht, vermitteln die Teilchen der Schicht eine elektrische Leitfähigkeit, die ausreicht, um elektrostatische Aufladungen und bei photographischen Materialien Verblitzungen zu vermeiden. Weiter zeichnen sich die wäßrigen Dispersionen dieser Polymerteilchen durch niedrige Viskosität aus, die in gießtechnischer Hinsicht von Vorteil ist. Über die Vernetzung der Teilchen bei ihrer Herstellung läßt sich, wie bereits weiter oben erläutert, der Quellgewichtsfaktor in Wasser beeinflussen, so daß es möglich wird, mit Hilfe der Polymerteilchen gemäß der Erfindung photographische Schichten mit speziellen Eigenschaften bezüglich ihres Quellvermögens herzustellen. Darüber hinaus kann die gute Quellfähigkeit der in photographischen Schichten anwesenden Polymerteilchen gemäß der Erfindung das Eindringen photographischer Verarbeitungsflüssigkeiten in diese Schichten unterstützen.

Die Polymersalzdispersionen der Erfindung können in die üblichen photographischen Schichten eingearbeitet werden, die als Bindemittel Gelatine oder andere natürliche oder synthetische Polymere enthalten, also sowohl in lichtempfindliche Emulsionsschichten als auch in nicht lichtempfindliche photographische Hilfsschichten, wie z.B. Schutzschichten, Zwischenschichten, Filterschichten oder Rückseitenschichten. In erster Linie werden jedoch außenliegende Schichten photographischer Materialien in Betracht kommen, also beispielsweise freiliegende Silberhalogenidemulsionsschichten, Schutzschichten und/oder Rückseitenschichten, je nachdem, ob auf die mattierende oder die elektrostatischen Eigenschaften der Polymerteilchen Wert gelegt wird. Andererseits kann beispielsweise auch eine Mattierung innenliegender Schichten eines photographischen Mehrschichtenmaterials, z.B. von Zwischenschichten, Filterschichten, von Vorteil sein, wenn während der einzelnen Etappen des Herstellungsprozesses der mehrschichtigen photographischen Materialien Beschädigungen durch Kontaktflecken, Ausrisse oder Klebeflecken vermieden werden sollen.

Die Polymersalzdispersionen der Erfindung werden den Gießzusammensetzungen photographischer Schichten im allgemeinen in solchen Mengen zugesetzt, daß für Gelatineschutzschichten 5 bis 30 Gewichtsprozent und vorzugsweise 15 bis 25 Gewichtsprozent des Gelatineanteils der Gießzusammensetzung und für Rückseitenschichten 20 bis 80 Gewichtsprozent und vorzugsweise 30 bis 50 Gewichtsprozent des Gelatineanteils durch Polymerteilchen ersetzt werden. Die Gewichtsangaben sind dabei auf das Gelatinetrockengewicht bezogen.

Wie schon erwähnt, können die Polymerteilchen der Erfindung auch verwendet werden, um einen Teil der in Silberhalogenid-emulsionsschichten als Bindemittel verwendeten Gelatine zu ersetzen. Durch diese Maßnahme kann die Quellgeschwindigkeit der Schichten erhöht und damit der Verarbeitungsprozeß beschleunigt werden. Gute Ergebnisse erhält man in diesem Fall mit Zusätzen von 10 bis 30 Gewichtsprozent, bezogen auf das Gelatinetrockengewicht der Schicht.

Der mit den Polymerteilchen der Erfindung erreichte Mattierungseffekt in Gelatineschichten zeichnet sich durch besondere Stabilität aus. Die zur Herstellung mattierter Schichten bisher zur Verfügung stehenden Polymerdispersionen in organischen Dispersionsmitteln zeigen demgegenüber deutliche Nachteile, insbesondere dann, wenn z.B. bei der Herstellung mattierter Schutzschichten der Beguß schnell und bei erhöhten Temperaturen getrocknet wird. Diese Maßnahme ist in solchen Fällen stets mit einem Nachlassen der mattierenden Wirkung verbunden. Auch bei der Entwicklung solcher photographischer Materialien geht die ursprüngliche Mattierung teilweise oder ganz verloren. Die Gründe hierfür sind im einzelnen nicht bekannt.

Als besonders vorteilhaft hinsichtlich ihrer mattierenden Wirkung haben sich Dispersionen erwiesen, deren Teilchen einen Quellgewichtsfaktor aufweisen, der im Bereich von 20 bis 30 liegt. Quellgewichtsfaktoren dieser Größe können — wie im Vorhergehenden bereits erläutert — in einfacher Weise durch Variation der Menge des Vernetzungsmittels bei der Polymerisation erhalten werden. Ein höherer Anteil an Vernetzungsmittel bewirkt geringere Quellung und umgekehrt.

Die Anwendung der Polymersalzdispersionen der Erfindung ist keinesfalls auf photographische Schichten beschränkt, die Gelatine als Bindemittel enthalten. Außer oder anstelle von Gelatine können

4

diese Schichten auch wasserlösliche hochpolymere Verbindungen enthalten, insbesondere Polyvinylalkohol, polyacrylsaures Natrium und carboxylgruppenhaltige Mischpolymerisate, ferner Polyvinylpyrolidon, Polyacrylamid oder hochmolekulare Naturstoffe wie Dextrane, Dextrine, Stärkeäther, Alginsäure bzw. Alginsäurederivate, Celluloseacetat, Cellulosesulfat.

Eine interessante Möglichkeit für die Herstellung antistatischer Rückseitenschichten besteht in der Verwendung synthetischer organischer Polymerer in Form wäßriger Latexdispersionen als Bindemittel in Verbindung mit den Polymersalzdispersionen, die sich für diesen Zweck als Bindemittel eignen, seien genannt Polyvinylpropionat, Butadien-Styrol-Copolymeren (Meth-)acrylat-Homo- und copolymere, Polyvinylester und Polyvinylidenchlorid.

In Verbindung mit solchen Latexdispersionen können 25 bis 70 Gew.%, und vorzugsweise 30 bis 50 Gew.% der Polymersalze bezogen auf das Trockengewicht der Schicht verwendet werden, worin die Latexdispersionen als einzige Bindemittel enthalten sind. Der Vorteil solcher Antistatikschichten besteht in einer guten Haftfähigkeit der Schichten auf hydrophoben Oberflächen sowie in der Wasserunlöslichkeit der Antistatikschichten.

Die Teilchengröße der nach den oben beschriebenen Verfahren hergestellten Polymerpartikel kann in einfacher Weise mikroskopisch ermittelt werden. Bei größeren Teilchen über 0,5 $\mu$ genügt hierfür ein Lichtmikroskop. Für kleinere Teilchen verwendet man zweckmäßigerweise elektronenmikroskopische Aufnahmen. Dazu wird die Dispersion zusammen mit Gelatinelösung zu einer Schicht vergossen, von der getrockneten Schicht werden Dünnschnitte von 0,1 $\mu$ Stärke und hiervon wiederum elektronenmikroskopische Aufnahmen hergestellt, aus denen man die Teilchengröße ermittelt. Für die Herstellung der Meßproben Mengenverhältnisse von 5 bis 30 Gew.-% der Dispension mit 95 bis 70 Gew.-% Gelatine verwendet.

Die Quellung der Teilchen in Wasser bei pH 7 wird durch Zentrifugieren bestimmt. Man zentrifugiert so lange, bis sich das Sedimentvolumen nicht mehr verändert. Das überstehende Wasser wird abgegossen. Aus dem Feststoffgehalt der Dispension $G_1$ und dem Gewicht des Sediments $G_2$ ergibt sich dann der Quellgewichtsfaktor

$$Q_G = \frac{G_2}{G_1}.$$

Die in den Beispielen erscheinende Größe Quellgeschwindigkeit $\mu$/sec. bedeutet die Dickenzunahme der Schicht beim Wässern bei pH 10.

Der Quellgewichtsfaktor der nach dem an zweiter Stelle genannten Verfahren hergestellten kleineren Polymerteilchen wird nach folgendem Verfahren ermittelt: Man stellt eine Verdünnungsreihe der Dispension her, in der der Festkörpergehalt von 2 Gewichtsprozent bis zu 20 Gewichtsprozent variiert wird.

Danach werden mit einem Rotationsviskosimeter die Viskositäten der einzelnen Proben bei pH 7 gemessen. Die ermittelten Viskositäten in cP werden in Abhängigkeit von der Konzentration der einzelnen Proben graphisch festgehalten. Die durch die einzelnen Meßpunkte dargestellte Kurve bildet bei einer bestimmten Konzentration K einen Knick. Diese Konzentration K wird als Maß für die Quellung verwendet, wobei der Quellgewichtsfaktor definiert wird als

$$Q_G = \frac{100}{K}.$$

Für die Bestimmung der Oberflächenwiderstände der Schichten, die die erfingungsgemäßen Teilchen enthalten, wird folgendes Verfahrer verwendet:

Eine Probe von 12 × 12 cm wird 24 Stunden an ein Klima von 23°C und 50% rel. Feuchte angeglichen. Anschließend werden auf die oberfläche der Probe im Abstand von 1 cm zwei Metallelektroden von 10 cm Länge aufgesetzt und der elektrische Widerstand mit einem handelsüblichen hochohmigen Meßgerät bestimmt.

Die folgenden Beispiele dienen der weiteren Erläuterung der Erfindung.

Die Beispiele 1 bis 3 und 8 beschreiben die Herstellung der Polymerteilchen der Erfindung, die Beispiele 4 bis 7 und 9 bis 12 die Anwendung der nach den Beispielen 1 bis 3 und 8 hergestellten Polymerteilchen.

## Beispiel 1

In 50 ml entionisiertem Wasser wurden unter Kühlung 20 g Acrylsäure, 2 g N,N′-Methylen-bis-acrylamid, 13,4 g Kaliumhydroxid und 0,12 g Natriumpersulfat gelöst. Diese wäßrige Lösung wurde mit einem hochtourigen Rührer in eine Lösung von 10 g Glycerin-mono/di-oleat in 90 ml Waschbenzin einemulgiert, bis die Teilchengröße einheitlich war und sich nach mikroskopischer Prüfung nicht mehr veränderte.

In einem Kolben mit Rückflußkühler wurde die Dispersion unter Stickstoffatmosphäre bei 80 bis 90°C polymerisiert und 15 Minuten nachgeheizt. Nach dem Abkühlen wurde gesiebt, um Agglomerate zu entfernen. Zur Aufarbeitung wurde die Dispersion mit Methanol gebrochen, der Niederschlag filtriert, mit Methanol gewaschen, in 500 ml Wasser aufgenommen und intensiv verrührt. Die Teilchengröße der so hergestellten Dispersion war 1 bis 2 $\mu$ und als Quellgewichtsfaktor wurde 10 ermittelt.

## Beispiel 2

### 2.1

In 35 ml Wasser wurden unter Kühlung 20 g Acrylsäure, 2,5 g N,N'-Methylen-bis-acrylamid, 9.6 g Natriumhydroxid und 0,25 g Natriumpersulfat gelöst und einemulgiert in eine Lösung von 5 g Sorbitan-dioleat in 95 g Toluol. Die Polymerisation wurde wie in Beispiel 1 durchgeführt. Fällung und Waschung erfolgten in Aceton. Anschließend wurde in Wasser dispergiert.

Die unter 2.1 beschriebene Arbeitsweise wurde wiederholt mit den in der folgenden Tabelle angegebenen Mengen Vernetzer. Man erhielt dabei Dispersionen (2.2, 2.3 und 2.4), deren Teilchen eine Größe von 1 bis 2 $\mu$ und nachstehende Quellgewichtsfaktoren hatten.

|  | 2.1 | 2.2 | 2.3 | 2.4 |
|---|---|---|---|---|
| Vernetzer (g) | 2,5 | 2,0 | 1,5 | 1,0 |
| Quellgewichtsfaktor | 8 | 14 | 25 | 39 |

## Beispiel 3

In 30 ml Wasser wurden unter Kühlung 20 g Acrylsäure, 1,5 g N,N'-Methylen-bis-acrylamid, 15,5 g Kaliumhydroxid und 0,2 g Natriumpersulfat gelöst und einemulgiert in eine Lösung von 10 g Glycerin-monp/di-oleat in Dekalin. Nach Reaktion und Aufarbeitung entsprechend Beispiel 1 mit Aceton und Methanol wurde eine wäßrige Dispersion erhalten, deren Teilchengröße 1 bis 1,5 $\mu$ und deren Quellgewichtsfaktor 15 betrug.

Die nach den Beispielen 1 bis 3 hergestellten Dispersionen eignen sich vorzüglich zur Mattierung und Verbesserung der elektrischen Leitfähigkeit von Schutzschichten photographischer Materialien. Die vorteilhafte Wirkung der Polymerteilchen als Mattierungsmittel ist aus den folgenden beiden Beispielen ersichtlich.

## Beispiel 4
### Herstellung einer mattierten Schutzschicht

Auf einem Schichtträger aus Cellulosetriacetat wurde eine Silberbromidjodidgelatine-Emulsion (3 Mol.-% Silberjodid), die pro Liter Emulsion 80 g Silberhalogenid und 80 g Gelatine enthielt, aufgetragen. Nach dem Trocknen der Emulsionsschicht wurde das Material in dreißig Teile geteilt.

Auf der Emulsionsseite der dreißig Proben wurde nun jeweils eine Schutzschicht aus alkalisch geäscherter Gelatine aufgebracht, die, bezogen auf das Gelatinetrockengewicht, 0, 5, 10, 20 und 30 Gewichtsprozent der entsprechend den Beispielen 1 bis 3 hergestellten Polymerteilchen enthielt. Der Auftrag der trockenen Schutzschicht betrug 1,6 g/m².

Zur Prüfung des Mattierungsgrades der einzelnen Proben wurde die Bildung von Newton-Farbringen benutzt. Zu diesem Zweck wurde die einzelne Probe mit einem Andruck von 1 kp/cm² elastisch gegen eine Glasplatte gepreßt und die Zahl der Farbinge, die durch Interferenzzwischen Schutzschichtoberfläche und Glasplatte entstehen, visuell beurteilt. Die Ergebnisse wurden wie folgt benotet:

1 = keine Interferenz (optimale Mattierung)

2 = sehr schwache Interferenz

3 = schwache Interferenz

4 = mittlere Interferenz

5 = starke Interferenz

6 = sehr starke Interferenz (keine Mattierung)

Die Ergebnisse des Interferenztestes sind in der folgenden Tabelle enthalten:

| Polymerteilchen gemäß Beispiel | Anteil Polymerteilchen in der Schutzschicht in Gew.–%, bezogen auf das Trockengewicht der Schicht | | | | |
|---|---|---|---|---|---|
| | 0 | 5 | 10 | 20 | 30 |
| 1 | 6 | 4 | 3 | 2 | 1 |
| 2.1 | 6 | 5 | 3 | 2 | 1 |
| 2.2 | 6 | 4 | 3 | 2 | 1 |
| 2.3 | 6 | 3 | 2 | 1 | 1 |

| Polymerteilchen gemäß Beispiel | Anteil Polymerteilchen in der Schutzschicht in Gew.–%, bezogen auf das Trockengewicht der Schicht | | | | |
|---|---|---|---|---|---|
| | 0 | 5 | 10 | 20 | 30 |
| 2.4 | 6 | 3 | 2 | 1 | 1 |
| 3 | 6 | 4 | 3 | 2 | 1 |
| Vergleich Polymethyl-methacrylat Teilchengröße 1–2 $\mu$ | 6 | 5 | 4 | 3 | 2 |

Fur den Vergleich wurden Polymerteilchen einer Größe von 1 bis 2 $\mu$ entsprechend BE–A 766 853 verwendet.

Beispiel 5

Beispiel 4 wurde wie folgt abgewandelt:

Schutzschichtzusammensetzungen, die 10 Gewichtsprozent, 20 Gewichtsprozent und 30 Gewichtsprozent Polymerteilchen, bezogen auf das Trockengewicht der Schicht, gemäß Beispiel 2.3 enthielten, wurden auf eine erstarrte, aber noch nicht getrocknete Silberbromidjodidgelatine-Emulsionsschicht aufgetragen und beide Schichten gemeinsam getrocknet. Die Trocknung wurde extrem langsam (30 Minuten) und extrem schnell (3 Minuten) durchgeführt, und zwar mit Luft von 20°C, die 10 g Wasser pro kg Luft enthielt, bzw. von 30°C mit 5 g Wasser pro kg Luft. Die Mattierungen der Proben wurden sowohl vor als auch nach der Entwicklung der Silberhalogenidschichten nach der in Beispiel 4 beschriebenen Methode geprüft:

| Verarbeitung der Proben | Gewichtsprozent-Anteil bezogen auf das Trockengewicht der Schicht Polymerteilchen in der Schutzschicht | | |
|---|---|---|---|
| | 10 | 20 | 30 |
| langsame Trocknung | | | |
| unentwickelt | 2 | 1 | 1 |
| entwickelt | 2 | 1—2 | 1 |
| schnelle Trocknung | | | |
| unentwickelt | 2 | 1—2 | 1 |
| entwickelt | 2 | 2 | 1 |

Vergleich:

| | | | |
|---|---|---|---|
| langsame Trocknung | | | |
| unentwickelt | 4 | 3 | 2 |
| entwickelt | 4 | 4 | 3 |
| schnelle Trocknung | | | |
| unentwickelt | 5 | 4 | 4 |
| entwickelt | 5 | 5 | 5 |

Für den Vergleich wurden die als Mattierungsmittel bekannten und aus Polymethylmethacrylat bestehenden Polymerteilchen (Teilchengröße 1—2 $\mu$) verwendet. Die Polymerteilchen wurden der Gießzusammensetzung der Schutzschicht in Form einer Dispersion zugesetzt.

Im Gegensatz zu dem bekannten Mattierungsmittel zeigen die für die Polymerteilchen der Erfindung ermittelten Werte nur geringe Schwankungen. Die Mattierungswirkung bleibt praktisch vollständig erhalten.

Wie bereits erwähnt, eignen sich die erfindungsgemäßen Polymerteilchen auch vorzüglich zur Verbesserung der Leitfähigkeit photographischer Schichten.

Beispiel 6

Auf einen mit einer Haftschicht versehenen Cellulosetriacetatfilm wurden 1 $\mu$ dicke Gelatineschichten aufgetragen, die jeweils 60 Gewichtsprozent und 70 Gewichtsprozent der Polymerteilchen, bezogen auf das Trockengewicht der Schicht, entsprechend den Beispielen 1, 2.1 und 2.3 enthielten. Danach wurden die Oberflächenwiderstände der Schichtproben, die die erfindungsgemäßen Polymerteilchen enthielten, und von Gelatineschichten ohne solche Zusätze verglichen. In der folgenden Tabelle sind die Ergebnisse in $\Omega$ angegeben. (Die Widerstandsmessungen erfolgten bei 23°C und 50% relativer Feuchte.)

8

| Polymerteilchen gemäß Beispiel | Gew.-% bezogen auf das Trockengeweicht der Schicht | $\Omega$ |
|---|---|---|
| — | — | $2 \cdot 10^{11}$ |
| 1 | 60 | $5 \cdot 10^{8}$ |
|  | 70 | $1 \cdot 10^{8}$ |
| 2.1 | 60 | $7 \cdot 10^{8}$ |
|  | 70 | $3 \cdot 10^{8}$ |
| 2.3 | 60 | $2 \cdot 10^{8}$ |
|  | 70 | $6 \cdot 10^{8}$ |

Eine überraschende Erhöhung der elektrischen Leitfähigkeit findet man, wenn die vorliegenden wäßrigen Dispersionen in Verbindung mit Latices als Bindemittel anstelle von Gelatine verwendet werden, eine Anwendungsmöglichkeit, die insbesondere für die Herstellung von Antistatikschichten interessant ist.

Beispiel 7

Es wurden wieder die Dispersionen der Beispiele 2.1 und 2.3 mit den unterschiedlichen Quellgewichtsfaktoren 8 und 25 verwendet. Als Bindemittel diente die 33%ige wäßrige Dispersion des Polyadditionsproduktes aus Adipinsäure-1,6-hexandiol-neopentylglykol-polyester (30/22/12), 1,6-Hexandiisocyanat und Natrium-$\gamma$-amino-propan-phosphonat-monomethylester entsprechend Verbindung 1 der DE—A 1 522 393. Der Anteil der Polymersalzteilchen in der trockenen Schicht betrug 30 bis 60 Gewichtsprozent. Nach Auftrag von 2 g/m² (trockene Schicht) auf einen Cellulosetriacetatschichtträger zeigten die Schichten bei Normalklima (23°C, 50% r.F.) folgende Oberflächenwiderstände in $\Omega$:

| Polymerteilchen entsprechend | Anteil Polymerteilchen (Gew.-%), bezogen auf das Trockengewicht der Schicht | | | |
|---|---|---|---|---|
| | 30 | 40 | 50 | 60 |
| Beispiel 2.1 | $4 \cdot 10^{8}$ | $9 \cdot 10^{7}$ | $4 \cdot 10^{7}$ | $2 \cdot 10^{7}$ |
| Beispiel 2.3 | $6 \cdot 10^{8}$ | $2 \cdot 10^{8}$ | $8 \cdot 10^{7}$ | $2 \cdot 10^{7}$ |

Zum Vergleich wurden Schichten hergestellt, die ebenfalls 2 g Feststoff/m² enthielten und in denen anstelle der Polymerteilchen 30—60 Gew.-% Gelatine, bezogen auf das Trockengewicht der Schicht, verwendet wurden. Die Vergleichsschichten ergaben Oberflächenwiderstände von $10^{10}—10^{11}$ $\Omega$.

Außer der für das vorliegende Beispiel als Bindemittel verwendeten Dispersion eines anionischen Polyurethans können in Verbindung mit den Polymersalzdispersionen der Erfindung auch andere Latices verwendet werden. Beispiele sind in der nachfolgenden Tabelle genannt. Es wurden Schichten, bestehend aus 50 Gewichtsprozent bezogen auf das Trockengewicht der Schicht Polymersalz gemäß Beispiel 2.3 und 50 Gewichtsprozent der in der Tabelle verzeichneten Latices hergestellt. Der Schichtauftrag betrug 2 g/m², die Bestimmung der Oberflächenwiderstände wurde bei 23°C und 50% r.F durchgeführt:

Ω

Prepiophan 70 D, Warenzeichen der BASF AG,
Ludwigshafen, für eine 50%ige wäßrige Dispersion
eines Polyvinylpropionats; pH 5—7; Dichte 1,03;
Teilchengröße 0,5—3 $\mu$     $1.10^7$

Bunatex K 71, Warenzeichen der Chemischen Werke
Hüls AG, Marl für eine 68%ige wäßrige Dispersion
eines Butadien-Styrol-Copolymers; pH 10,5     $8.10^6$

Acronal ST 420 D, Warenzeichen der BASF AG,
Ludwigshafen, für eine 42%ige wäßrige Dispersion
eines Acrylsäureestercopolymerisats; pH 3,5—4,5;
Dichte 1,05     $8.10^6$

Acronal 570 D, Warenzeichen der BASF AG,
Ludwigshafen, für eine 50%ige wäßrige Dispersion
eines Acrylsäureester-copolymerisats;
pH 8—9; Dichte 1,07; Teilchengröße 0,2 $\mu$     $1.10^7$

Vinnapas EP 1, Warenzeichen der Wacker-Chemie
GmbH, München für eine 50%ige wäßrige Dispersion
eines Copolymers aus vinylacetat und Äthylen; pH 4;
Dichte 1,05; Teilchengröße 0,5—2 $\mu$     $4.10^6$

Vinnapas EV 2, Warenzeichen der Wacker-Chemie
GmbH, München für ein 50%ige wäßrige Dispersion
eines Copolymerisats aus Vinylacetat/Äthylen; pH 4;
Dichte 1,05; Teilchengröße 0,5—2 $\mu$     $7.10^7$

Das folgende Beispiel zeigt die Herstellung einer Polymersalzdispersion in zwei Stufen, wobei ein in der ersten Stufe durch W/O-Emulsionspolymerisation hergestellter Latex in der zweiten Stufe in wäßriger Phase verseift wird.

Beispiel 8

Erste Stufe:

In ein Reaktionsgefäß, das 3400 g entionisiertes Wasser enthält, werden als Netzmittel 23 g ein Natriumdodecyldiphenylätherdisulfonat gegeben Unter Einleiten von Stickstoff und kräftigem Rühren wird auf innen 75°C erwärmt. Nach Erreichen dieser Temperatur werden 200 g einer Monomermischung aus 1245 g frisch destilliertem Methylacrylat und 50 g frisch destilliertem Trivinylcyclohexan innerhalb von 15 Minuten zugetropft. Nach ungefähr 10 Minuten, wenn die Innentemperatur wieder 75°C erreicht hat, werden 88 g einer Initiatorlösung aus 8,25 g Kaliumperoxydisulfat in 260 g Wasser (dest.) zufließen lassen. Danach steigt die Innentemperatur auf 81 bis 83°C an. Sobald diese Temperatur erreicht ist, wird mit dem Zutropfen des Restes der Monomermischung begonnen. Dabei wird die Zutropfgeschwindigkeit so reguliert, daß die Temperatur stets zwischen 80 und 83°C liegt. Etwa 30 Minuten nach dem Beginn der Zugabe der restlichen zwei Drittel Momomerlösung wird mit der Zugabe der restlichen Initiatorlösung begonnen, und zwar so, daß beide Lösungen ungefähr gleichzeitig eingetropft sind. Es wird 30 Minuten bei innen 80 bis 83°C nachgerührt. Anschließend versetzt man mit einer 80%igen Lösung von 800 mg tert. Butylhydroperoxyd und 400 mg des obengenannten Netzmittels in 4,5 g entionisiertem Wasser sowie einer Lösung von 800 mg Ascorbinsäure in 87 g Wasser und rührt weitere 2 Stunden bei 80 bis 83°C nach. Nach dem Erkalten werden geringe Mengen ausgefallenen Produktes durch Filtration über ein Drahtnetz mit 10.000 Maschen pro Quadratzentimeter abgetrennt. Es sollen unter dem Mikroskop keine Teilchen größer als 0,4 $\mu$ sichtbar sein.

Zweite Stufe:

2560 g des wie oben beschrieben hergestellten Latex werden innerhalb von 30 Minuten bei Raumtemperatur mit einer Lösung von 101 g KOH in 2,5 l Wasser vorsichtig versetzt, so daß es nicht zu einer Ausflockung des Latex kommt, und anschließend 7 Stunden bei Raumtemperatur nachgerührt. Nach dieser Anverseifungsphase wird unter Rühren 6,5 Stunden auf außen 120°C erhitzt (starke Schaumbildung!) und danach langsam innerhalb einer Stunde mit einer Lösung von 223 g KOH in 875 ml Wasser versetzt. Es wird weitere 20 Stunden bei außen 120°C nachgerührt, bis der pH bei 10 bis 10,4 liegt. Dabei sollte über eine Brücke entstandenes Methanol sowie Restmonomer abgetrennt werden. Nach Erreichen des gewünschten pH-Wertes wird mit Wasser auf 10% Feststoff verdünnt.

10

# 0 003 043

*8.1*

Anstelle von 50 g Trivinylcyclohexan in der Monomermischung des Beispiels 8 werden 100 g Trivinylcyclohexan eingesetzt.

*8.2*

Anstelle von 100 g Trivinylcyclohexan in der Monomermischung des Beispiels 8.1 werden 200 g Trivinylcyclohexan eingesetzt.

Die Teilchengröße der so hergestellten Produkte betrug 0,06—0,08 $\mu$, die Quellgewichtsfaktoren waren 13, 7 und 4,5.

### Beispiel 9

Die entsprechend Beispiel 8 hergestellten Polymerteilchen werden zur Bestimmung ihrer antistatischen Eigenschaften wie folgt zu Schichten verarbeitet:

Die auf 3 Gewichtsprozent Festkörpergehalt verdünnten Dispersionen der Polymerteilchen aus Beispiel 8, 8.1 und 8.2 werden mit 3 gewichtsprozentigen wäßrigen Gelatinelösungen von pH 7 so abgemischt, daß die Mischungen 50, 40, 33 und 25 Gewichtsprozent erfindungsgemäße Polymerteilchen enthalten. Die Mischungen werden mit 50 ml/m² sowohl auf eine Cellulosetriacetatunterlage als auch auf eine 10 $\mu$ dicke Gelatineschicht auf einer Cellulosetriacetatunterlage aufgetragen und getrocknet. Es ergab sich eine Schichtauftrag von jeweils 1,5 g/m². Die Proben wurden einen Tag bei 23°C und 50% r.F. gelagert. Die Bestimmung der Oberflächenwiderstände ergab dann folgende Werte: (Gewichtsprozentangaben beziehen sich auf das Trockengewicht der Schicht)

| Antiel Polymerteilchen in Gew.–% | Polymerteilchen nach Beispiel: | | | | | |
| --- | --- | --- | --- | --- | --- | --- |
| | 8 | | 8.1 | | 8.2 | |
| | Beguß auf: | | | | | |
| | Cellulose-triacetat | Gelatine | Cellulose-triacetat | Gelatine | Cellulose-triacetat | Gelatine |
| 50 | $<10^6$ | $<10^6$ | $<10^6$ | $<10^6$ | $<10^6$ | $<10^6$ |
| 40 | $5.10^6$ | $1.10^7$ | $5.10^6$ | $1.10^7$ | $3.10^7$ | $9.10^7$ |
| 33 | $1.10^7$ | $2.10^7$ | $1.10^7$ | $1.10^7$ | $2.10^8$ | $9.10^8$ |
| 25 | $5.10^8$ | $2.10^9$ | $1.10^9$ | $8.10^9$ | $3.10^{10}$ | $2.10^{10}$ |

| Anteil Polymerteilchen in Gew.–% | Beguß auf: | |
| --- | --- | --- |
| | Cellulose-triacetat | Gelatine |
| Vergleich: Na-Polyacrylat | | |
| 50 | $2 . 10^6$ | $6 . 10^9$ |
| 40 | $7 . 10^7$ | $9 . 10^9$ |
| 33 | $4 . 10^8$ | $8 . 10^9$ |
| 25 | $1 . 10^9$ | $2 . 10^{10}$ |

11

**0 003 043**

Die Ergebnisse zeigen, daß die elektrischen Widerstände der Schichten auf einem Unterguß aus Gelatine nur wenig höher als die der Schichten auf Acetatfilm liegen. Die in der Tabelle vermerkten Vergleichswerte für Na-Polyacrylat liegen bei den Proben mit Gelatineunterguß um zwei Zehnerpotenzen höher, und zwar bedingt durch die Diffusion der Polymersalze in die benachbarte Gelatineschicht.

Bemerkenswert sind weiter die Unterschiede in den Oberflächenwiderständen bei 25 Gew.-% Anteil an Polymerteilchen, bezogen auf das Trockengewicht der Schicht. Es zeigt sich, daß diese im wesentlichen durch das verschiedene Quellvermögen der Polymerteilchen bedingt sind. Der Quellgewichtsfaktor der Teilchen nimmt von Beispiel 8 über 8.1 nach 8.2 von 13 bis 4,5 ab. Der Oberflächenwiderstand nimmt bei diesen Proben gleichzeitig um zwei Zehnerpotenzen ab.

Beispiel 10

Die Abhängigkeit der Oberflächenwiderstände vom pH-Wert der Gießlösung, aus der die die Polymerteilchen der Erfindung enthaltenden Schichten hergestellt werden, zeigt folgende Versuchsreihe:

Auf die in Beispiel 9 verwendete Cellulosetriacetatunterlage wurden Proben einer Mischung aus 25 Gewichtsprozent der Polymerteilchen entsprechend Beispiel 8 und 75 Gewichtsprozent Gelatine in einer Menge von 1,5 g/m² aufgetragen. Der pH-Wert der einzelnen gießfertigen Mischungen wurde mittels eines handelsüblichen pH-Meters mit Glaselektrode auf die pH-Werte 5, 6, 7, 8, 9 und 10 eingestellt. Die Oberflächenwiderstände der Schichtproben wurden nach eintägiger Lagerung bei 23°C und 50% r.F. ermittelt. Die Ergebnisse sind in der folgenden Tabelle zusammengestellt:

| pH | 5 | 6 | 7 | 8 | 9 | 10 |
|---|---|---|---|---|---|---|
| Oberflächen-widerstand ($\Omega$) | $6 \cdot 10^{10}$ | $2 \cdot 10^{10}$ | $3 \cdot 10^{8}$ | $3 \cdot 10^{7}$ | $1 \cdot 10^{7}$ | $6 \cdot 10^{6}$ |

Wie die Ergebnisse zeigen, ist der Einfluß des pH-Wertes der Gießmischung auf den Oberflächenwiderstand der resultierenden Schichten ungewöhnlich stark, und es ist daher für die Praxis von Bedeutung, die Gießlösung mit einem pH-Wert von 7 oder größer zu vergießen. Auch die darunter- oder darüberliegenden photographischen Schichten sollen nach Möglichkeit einen pH-Wert von 7 aufweisen, da ein niedrigerer pH-Wert der benachbarten Schichten die antistatischen Eigenschaften der die erfindungsgemäßen Polymerteilchen enthaltenden Schicht beeinträchtigen kann.

Beispiel 11

Die Ähnlichkeit des Quellverhaltens einerseits der erfindungsgemäßen Polymerteilchen und andererseits von Gelatine zeigt folgender Vergleich:

Es wurden Gelatineschichten hergestellt, die jeweils 30 Gewichtsprozent der Polymerteilchen, bezogen auf das Trockengewicht der Schicht, gemäß Beispiel 8, 8.1 und 8.2 enthielten. Die Härtung der Gelatine erfolgte in der Begußmischung mit 0,3 Gew.-% Chromalaun und 0,6 Gewichtsprozent Triacrylformal, bezogen auf den Gesamtfestkörpergehalt der Begußmischung. Die Schichtdicke betrug 10 $\mu$. Die Quellwerte der Schichtproben wurden nach einem Tag Lagerung bei 23°C und 50% r.F. mit Wasser bei pH 10 nach dem weiter vorn beschriebenen Verfahren bestimmt.

| | reine Gelatine | Gelatinemischung mit Polymerteilchen entsprechend Beispiel | | |
|---|---|---|---|---|
| | | 8 | 8.1 | 8.2 |
| Quellgewichtsfaktor | 5,0 | 6,2 | 4,5 | 3,2 |
| Quellgeschwindigkeit $\mu$/sec. | 3,5 | 8,2 | 7,1 | 6,6 |

Die Ergebnisse zeigen, daß die Anwendung der Polymerteilchen der Erfindung im Gemisch mit Gelatine keinerlei nachteilige Wirkung auf das Quellverhalten der Gelatine hat. Das Quellverhalten der Gelatine ist von entscheidender Bedeutung für die Entwicklungskinetik photographischer Gelatineschichten.

12

# 0 003 043

Beispiel 12

Die in der in Beispiel 8 beschriebenen Weise hergestellten wäßrigen Dispersionen von Polymerteilchen können in Verbindung mit wäßrigen Dispersionen anderer Polymerer mit Vorteil für die Herstellung antistatischer Schichten verwendet werden.

Folgende im Handel erhältliche Polymerdispersionen wurden mit der Dispersion des Beispiels 8.1 so gemischt, daß die Mischung 33 Gewichtsprozent der Polymerteilchen gemäß Beispiel 8.1 enthielt:

a) Diofan 180 D, Warenzeichen der BASF AG, Ludwigshafen, für eine 45%ige wäßrige Dispersion von Mischpolymerisaten auf der Basis Polyvinylidenchlorid; pH 2,5—5,5; Dichte 1,23; Teilchengröße 0,15 $\mu$.

b) Acronal 290 D, Warenzeichen der BASF AG, Ludwigshafen, für eine 50%ige wäßrige Dispersion eines Mischpolymerisates auf der Basis von Acrylsäureestern; pH 7,5—9; Dichte 1,04; Teilchengröße 0,1 $\mu$.

c) Vinnapas EV 1, Warenzeichen der Wacker-Chemie, München, für eine 50%ige wäßrige Dispersion eines Copolymerisates auf der Basis Vinylacetat/Äthylen; pH 3,8—4,2; Dichte 1,05 Teilchengröße 1 $\mu$.

Die Mischungen wurden in einer Menge von 2 g Feststoff/m² auf Schichtträger aus Cellulosetriacetat (I), Polyäthylenterephthalat (II), Polyäthylen (III) und Polyvinylchlorid (IV) vergossen. Nach Trocknung und eintägiger Lagerung bei 23°C und 50% r.F. wurden die Oberflächenwiderstände ($\Omega$) der Schichten gemessen. Die Ergebnisse enthält die folgende Tabelle:

| Mischung | Schichtträger | | | |
|---|---|---|---|---|
| | I | II | III | IV |
| a) | $3 \cdot 10^7$ | $2 \cdot 10^7$ | $9 \cdot 10^7$ | $1 \cdot 10^8$ |
| b) | $5 \cdot 10^7$ | $5 \cdot 10^7$ | $8 \cdot 10^7$ | $4 \cdot 10^7$ |
| c) | $5 \cdot 10^7$ | $8 \cdot 10^7$ | $2 \cdot 10^8$ | $3 \cdot 10^7$ |

Vergleichsschichten mit 33 Gew.% derselben Dispersionen und 67 Gew.% Gelatine auf den Schichtträgern I bis IV zeigten ebenfalls Widerstände im Bereich von $1.10^7$. Sie wiesen allerdings keine oder eine sehr mangelhafte Haftung auf hydrophoben Oberflächen auf. Im Gegensatz dazu ließen sich die Schichten gemäß a) bis c) ohne Schaden zu nehmen bei 50°C wässern. Sie erwiesen sich damit als völlig unlöslich.

**Patentansprüche**

1. Photographisches lichtempfindliches Material mit mindestens einer Silberhalogenidemulsionsschicht, das in mindestens einer seiner lichtempfindlichen oder nicht lichtempfindlichen Schichten ein durch Emulsionspolymerisation hergestelltes teilchenförmiges Acrylpolymerisat enthält, dadurch gekennzeichnet, daß als Acrylpolymerisat ein vernetztes Acrylsäure- und/oder Methacrylsäurepolymerisat vorliegt, das eine Teilchengröße im Trockenzustand von 0,01 bis 5 $\mu$, vorzugsweise 0,03 bis 2 $\mu$ und einen Quellgewichtsfaktor in Wasser von 4—40 aufweist, wobei das Polymerisat entweder

a) durch inverse Emulsionspolymerisation (Wasser in Öl) von Acrylsäure- und/oder Methacrylsäure-Monomeren in Gegenwart polyfunktioneller vernetzend wirkender Monomerer und eines Emulgators, Brechen der Emulsion und Redispergierung der Polymerteilchen in Wasser, oder

b) durch Emulsionspolymerisation kurzkettiger, bis zu 3 C-Atome enthaltender aliphatischer Ester von Acrylsäure- und/oder Methacrylsäure- in Wasser in Gegenwart polyfunktioneller vernetzend wirkender Monomerer und eines Emulgators, und anschließender Verseifung des Polymeren hergestellt wurde.

2. Material nach Anspruch 1, dadurch gekennzeichnet, daß in einer äußeren gelatinehaltigen

**0 003 043**

Schicht Polymerteilchen einer Größe von 1 bis 3 $\mu$ und mit einem Quellgewichtsfaktor von 8 bis 40, vorzugsweise 20 bis 30, in einer Menge von 5 bis 30 Gew.-%, bezogen auf das Trockengewicht der Schicht, enthalten sind.

3. Material nach Anspruch 1, dadurch gekennzeichnet, daß in einer Rückseitenschicht Polymerteilchen einer Größe von 1 bis 3 $\mu$ mit einem Quellgewichtsfaktor von 8 bis 40, dispergiert in einem synthetischen organischen Polymeren als Bindemittel in einer Menge von 25 bis 70 Gew.-%, vorzugsweise 30 bis 50 Gew.-%, der Polymerteilchen, bezogen auf das Trockengewicht der Schicht, enthalten sind.

4. Material nach Anspruch 1, dadurch gekennzeichnet, daß in einer äußeren gelatinehaltigen Schicht Polymerteilchen einer Größe von 0,01 bis 0,3 $\mu$, vorzugsweise 0,03 bis 0,1 $\mu$, und mit einem Quellgewichtsfaktor von 3 bis 14 in einer Menge von 25 bis 50 Gew.-%, bezogen auf das Trockengewicht der Schicht, enthalten sind.

5. Material nach Anspruch 1, dadurch gekennzeichnet, daß in einer Rückseitenschicht Polymerteilchen einer Größe von 0,01 bis 0,3 $\mu$ mit einem Quellgewichtsfaktor von 3 bis 14, dispergiert in einem synthetischen organischen Polymeren als Bindemittel in einer Menge von 25 bis 70 Gew.-% der Polymerteilchen, bezogen auf das Trockengewicht der Schicht, enthalten sind.

6. Material nach Anspruch 3 bis 5, dadurch gekennzeichnet, daß die die Polymerteilchen enthaltende Schicht einen pH von 7 bis 10 aufweist.

## Claims

1. A photographic light-sensitive material having at least one silver halide emulsion layer, which contains, in at least one of its light-sensitive or non-light-sensitive layers, an acrylic polymer in particulate form produced by emulsion polymerisation, characterised in that the acrylic polymer is a cross-linked acrylic acid and/or methacylic acid polymer which has a particle size in the dry state of from 0.01 to 5 $\mu$, preferably from 0.03 to 2 $\mu$, and a swelling factor in water of from 4 to 40, which polymer was prepared either:

a) by inverse emulsion polymerization (water-in-oil) of acrylic and/or methacrylic acid monomers in the presence of polyfunctional cross-linking monomers and an emulsifier, breaking down of the emulsion and redispersion of the polymer particles in water; or

b) by emulsion polymerization of short chained aliphatic esters, containing up to 3 carbon atoms, of acrylic and/or methacrylic acid in water in the presence of polyfunctional cross-linking monomers and an emulsifier, followed by saponification of the polymer.

2. A material according to Claim 1, characterized in that polymer particles measuring from 1 to 3 $\mu$ and having a swelling factor of from 8 to 40, preferably from 20 to 30, are contained in an outer gelatine-containing layer in a quantity of from 5 to 30% by weight, based on the dry weight of the layer.

3. A material according to Claim 1, characterized in that polymer particles measuring from 1 to 3 $\mu$ and having a swelling factor of from 8 to 40, dispersed in a synthetic organic polymer as binder, are contained in a back layer in a quantity of from 25 to 70% by weight, preferably 30 to 50% by weight of the polymer particles, based on the dry weight of the layer.

4. A material according to Claim 1, characterized in that polymer particles measuring from 0.01 to 0.3 $\mu$, preferably from 0.03 to 0.1 $\mu$, and having a swelling factor of from 3 to 14, are contained in an outer gelatine-containing layer in a quantity of from 25 to 50% by weight, based on the dry weight of the layer.

5. A material according to Claim 1, characterized in that polymer particles measuring from 0.01 to 0.3 $\mu$ and having a swelling factor of from 3 to 14 dispersed in a synthetic organic polymer as binder are contained in a back layer in a quantity of from 25 to 70% by weight of the polymer particles based on the dry weight of the layer.

6. A material according to Claims 3 to 5, characterized in that the layer containing the polymer particles has a pH value of from 7 to 10.

## Revendications

1. Matériau photographique photosensible à au moins une couche d'émulsion d'halogénure d'argent, contenant dans une au moins de ses couches photosensibles ou non photosensibles un polymère acrylique en particules préparé par polymérisation en émulsion, caractérisé en ce que le polymère acrylique est un polymère réticulé de l'acide acrylique et/ou de l'acide méthacrylique, à une dimension de particule à l'état sec de 0,01 à 5 microns, de préférence de 0,03 à 2 microns, et présentant un facteur de gonflement en poids dans l'eau de 4 à 40, ce polymère ayant été préparé soit

## 0 003 043

a) par polymérisation en émulsion inversée (eau-dans-l'huile) de l'acide acrylique et/ou de l'acide méthacrylique monomère en présence de monomères polyfonctionnels à effet réticulant et d'un agent émulsionnant, rupture de l'émulsion et redispersion des particules de polymère dans l'eau, soit

b) par polymérisation en émulsion d'esters aliphatiques à chaîne courte contenant jusqu'à 3 atomes de carbone, de l'acide acrylique et/ou de l'acide méthacrylique dans l'eau en présence de monomères polyfonctionnels à effet réticulant et d'un agent émulsionnant, avec saponification subséquente du polymère.

2. Matériau selon la revendication 1, caractérisé en ce que, dans une couche extérieure contenant de la gélatine, il contient des particules de polymère à une dimension de 1 à 3 microns, avec un facteur de gonflement en poids de 8 à 40, de préférence de 20 à 30, en quantité de 5 à 30% du poids sec de la couche.

3. Matériau selon la revendication 1, caractérisé en ce que, dans une couche de face postérieure, il contient des particules de polymère à une dimension de 1 à 3 microns, avec un facteur de gonflement en poids de 8 à 40, dispersées dans un polymère organique synthétique qui sert de liant, à raison de 25 à 70% en poids, de préférence de 30 à 50% en poids des particules de polymère par rapport au poids sec de la couche.

4. Matériau selon la revendication 1, caractérisé en ce qu'il contient, dans une couche extérieure contenant de la gélatine, des particules de polymère à une dimension de 0,01 à 0,3 micron, de préférence de 0,03 à 0,1 micron, avec un facteur de gonflement en poids de 3 à 14, en quantité de 25 à 50% du poids sec de la couche.

5. Matériau selon la revendication 1, caractérisé en ce qu'il contient, dans une couche de face postérieure, des particules de polymère à une dimension de 0,01 à 0,3 micron, avec un facteur de gonflement en poids de 3 à 14, dispersées dans un polymère organique synthétique qui sert de liant, à raison de 25 à 70% en poids des particules de polymère par rapport au poids sec de la couche.

6. Matériau selon les revendications 3 à 5, caractérisé en ce que la couche contenant les particules de polymère présente un pH de 7 à 10.